# EUROPEAN PATENT SPECIFICATION

(11) **EP 3 036 653 B1**
(45) Date of publication and mention of the grant of the patent: **04.07.2018**
(21) Application number: 14837417.6
(22) Date of filing: 23.07.2014
(51) Int. Cl.: G06F 17/00, A01D 41/127, G07C 5/00

(54) **SOUND FEEDBACK SYSTEM FOR VEHICLES**
SCHALLRÜCKKOPPLUNGSSYSTEM FÜR FAHRZEUGE
SYSTÈME DE RÉTROACTION SONORE POUR VÉHICULES

(30) Priority: 20.08.2013 US 201313971051
(43) Date of publication of application: 29.06.2016
(73) Proprietor: Deere & Company, Moline, IL 61265 (US)
(72) Inventor: SANCHEZ, Julian, Champaign, IL 61822 (US); SULLIVAN, Kristin J., Des Moines, IA 50310 (US); WASHBURN, Karl B., Le Claire, IA 52753-9577 (US); ANDERSON, Noel W., Fargo, ND 58102 (US)
(74) Representative: Holst, Sönke
(86) International application number: PCT/US2014/047799
(87) International publication number: WO 2015/026469

(56) References cited:
- US-A1- 2004 093 841
- US-A1- 2004 186 597
- US-A1- 2009 312 914
- US-A1- 2011 130 905
- US-A1- 2013 166 157
- US-A1- 2013 166 157
- US-B1- 6 330 499
- US-B1- 6 812 854

## Description

The present disclosure generally relates to a system and method for providing a feedback sound representative of one or more vehicles.

### Background

To provide feedback regarding one vehicle to another vehicle, certain prior art utilizes an imaging device and a monitor such that an operator can visually monitor an operational status of one vehicle from another vehicle.

US 2013/0166157 A1 describes a forage harvester operating together with a follower vehicle in a field. If the follower vehicle comes into the proximity of the forage harvester, a sound is generated in the forage harvester cab. This sounds becomes higher in the frequency as the follower vehicle approaches or lower in the frequency as the follower vehicle recedes.

### Summary

A sound feedback system and method is configured for providing a feedback sound representative of a first vehicle status of a first vehicle and a second vehicle status of a second vehicle operating together in a work area. The sound feedback system comprises a first vehicle data bus of the first vehicle. A first wireless communication device is in communication with the first vehicle data bus. The first wireless communication device is configured to receive second vehicle status data from a second wireless communication device of a second vehicle. In the first vehicle, an electronic data processing system is configured to receive first vehicle status data and the second vehicle status data. A sound integration module is capable of forming or determining the feedback sound from the first vehicle status data and the second vehicle status data. A sound generator module is configured to communicate the feedback sound to a user.

The sound generator module is configured to determine whether the first vehicle and the second vehicle are operating properly and generate a first tone representative of the first vehicle status data and a second tone representative of the second vehicle status data, if at least one of the first vehicle and the second vehicle is not operating properly the first tone and the second tone are on different frequencies or spaced apart in the frequencies of a minor chord or a dissonant sound, if the first vehicle and the second vehicle are operating properly, the first tone and the second tone are on the same frequency or spaced on frequencies that form notes of a major chord.

Other features and aspects will become apparent by consideration of the detailed description and accompanying drawings.

### Embodiment

- FIG. 1: is a schematic of a sound feedback system according to one embodiment.
- FIG. 2: is a schematic of a sound feedback system according to another embodiment.
- FIG. 3: is a plan view of a first vehicle and a second vehicle incorporating the sound feedback system of FIGS. 1 or 2.
- FIG. 4: is a flow chart of the steps of the method for providing sound feedback to a user or manager of one or more vehicles according to one embodiment.
- FIG. 5: is a flow chart of the steps of the method for providing sound feedback to a user or manager of one or more vehicles according to another embodiment.
- FIG. 6: is a flow chart of the steps of the method for providing sound feedback to a user or manager of one or more vehicles according to yet another embodiment.

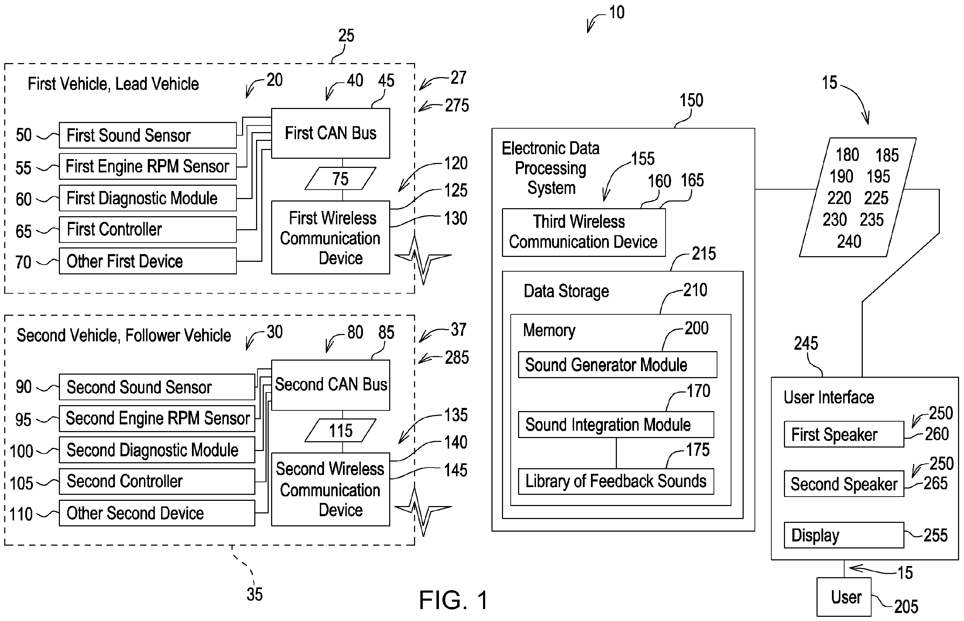

FIGS. 1-6 illustrate various embodiments of a sound feedback system 10 for providing a feedback sound representative of a vehicle. With reference to FIG. 1, in one embodiment the illustrated sound feedback system 10 is configured for providing a feedback sound 15 representative of a first vehicle status 20 of a first vehicle electronics 25 of a first vehicle 27 (e.g., tractor, combine, construction vehicle) and a second vehicle status 30 of a second vehicle electronics 35 of a second vehicle 37 (e.g., tractor, combine, construction vehicle).

The sound feedback system 10 comprises a first vehicle data bus 40 of the first vehicle electronics 25. For example, the first vehicle data bus 40 may be a first CAN bus 45. A first sound sensor 50, or a first engine RPM sensor 55, a first diagnostic module 60, a first controller 65, or other first device 70 (e.g., engine controller, transmission controller, controller, other sensor, network element), may be in communication with the first vehicle data bus 40 to collect and provide first vehicle status data 75 (e.g., ambient sound, engine sound, combine separator). For instance, the first diagnostic module 60 is capable of producing diagnostic codes, alarm data, warning data, trouble codes or status messages as the first vehicle status data 75.

The sound feedback system 10 comprises a second vehicle data bus 80 of the second vehicle electronics 35. For example, the second vehicle data bus 80 may be a second CAN bus 85. A second sound sensor 90, or a second engine RPM sensor 95, a second diagnostic module 100, a second controller 105, or other
second device 110 (e.g., engine controller, transmission controller, controller, other sensor, network element), may be in communication with the second vehicle data bus 80 to collect and provide second vehicle status data 115 (e.g., ambient sound, engine sound, combine separator). For instance, the second diagnostic module 100 is capable of producing diagnostic codes, alarm data, warning data, trouble codes or status messages as the second vehicle status data 115.

A first wireless communication device 120 is in communication with the first vehicle data bus 40. The first wireless communication device 120 is configured to communicate the first vehicle status data 75. The first wireless communication device 120 may be a first transceiver 125 or a first transmitter 130.

A second wireless communication device 135 is in communication with the second vehicle data bus 80. The second wireless communication device 135 is configured to communicate the second vehicle status data 115. The second wireless communication device 135 may be a second transceiver 140 or a second transmitter 145.

An electronic data processing system 150 is configured to receive the first vehicle status data 75 and the second vehicle status data 115 from the first vehicle data bus 40 and the second vehicle data bus 80 via the first wireless communication device 120 and the second wireless communication device 135, respectively. The electronic data processing system 150 may comprise a third wireless communication device 155 to communicate with the first wireless communication device 120 and the second wireless communication device 135. The third wireless communication device 155 may be a third transceiver 160 or a receiver 165.

In one embodiment, a sound integration module 170 comprises one or more amplifiers, attenuators, combiners, mixers, multipliers, frequency shifters, analog-to-digital converters, digital-to-analog converters, software emulators, software modules, or electronic modules for processing vehicle status data or vehicle sounds in the analog or digital domain. In one configuration, the sound integration module 170 is adapted to derive, form, or create synthetically-created sounds from one or both of the first vehicle status 20 and the second vehicle status 30, data diagnostic codes, alarm data, warning data, or trouble codes from one or both of the first vehicle electronics 25 and the second vehicle electronics 35, for example.

In an alternate configuration, the sound integration module 170 is capable of generating, combining (equally or weighted), mixing, amplifying, attenuating, frequency shifting, multiplying, creating (e.g., synthetically-derived or synthetically-created vehicle sounds), or processing sounds (e.g., recorded sounds) representative of an operational or functional status of the first vehicle electronics 25, the second vehicle electronics 35, or both.

The sound integration module 170 is configured to form or determine the feedback sound 15 from the first vehicle status data 75 and the second vehicle status data 115. According to an example, the sound integration module 170 may match the first vehicle status data 75 and the second vehicle status data 115 to a library of feedback sounds 175 and communicate the feedback sound 15.

The sound integration module 170 may be configured to determine whether the first vehicle electronics 25 and the second vehicle electronics 35 are operating properly and form the feedback sound 15 as a dissonant chord 180 if at least one of the first vehicle electronics 25 and the second vehicle electronics 35 is not operating properly and form the feedback sound 15 as a major chord 185 if the first vehicle electronics 25 and the second vehicle electronics 35 are operating properly. The determination of whether the first vehicle electronics 25 and the second vehicle electronics 35 are operating properly may be determined by a threshold deviation between an expected and actual first vehicle status data 75 and second vehicle status data 115.

According to an example, the sound integration module 170 may be configured to determine whether the first vehicle electronics 25 and the second vehicle electronics 35 are operating properly and form the feedback sound 15 in an amplified manner 190 if at least one of the first vehicle electronics 25 and the second vehicle electronics 35 is not operating properly and form the feedback sound 15 in a non-amplified manner 195 if the first vehicle electronics 25 and the second vehicle electronics 35 are operating properly.

A sound generator module 200 is configured to communicate the feedback sound 15 to a user 205. The sound integration module 170 and the sound generator module 200 may be separate electronic hardware modules or software included in a memory 210 of a data storage 215 of the electronic data processing system 150.

According to the invention, the sound generator module 200 may be configured to determine whether the first vehicle electronics 25 and the second vehicle electronics 35 are operating properly and generate a first tone 220 representative of the first vehicle status data 75 and a second tone 225 representative of the second vehicle status data 115. If at least one of the first vehicle electronics 25 and the second vehicle electronics 35 is not operating properly, the first tone 220 and the second tone 225 may be on different frequencies or spaced apart in the frequencies of a minor chord 230 or a dissonant sound 235. If the first vehicle electronics 25 and the second vehicle electronics 35 are operating properly, the first tone 220 and the second tone 225 may be on the same frequency or spaced on frequencies that form notes of the major chord 185. In addition, the feedback sound 15 may comprise a voice recording 240 if at least one of the first vehicle electronics 25 and the second vehicle electronics 35 is not operating properly. For example, the voice recording 240 may state "check engine" or other phrases.

For example, a user interface 245 comprising a speaker 250 is in communication with the sound generator module 200. The user interface 245 is configured to communicate the feedback sound 15 through the speaker 250. The user interface 245 may provide additional detail on a display 255 (e.g., LCD screen).

According to an example, the user interface 245 may comprise a first speaker 260 and a second speaker 265. The user interface 245 may be configured to communicate the feedback sound 15 representative of the first vehicle status 20 of the first vehicle electronics 25 primarily through the first speaker 260 and the feedback sound 15 representative of the second vehicle status 30 of the second vehicle electronics 35 primarily through the second speaker 265. This enables a stereo effect, where an illusion of directionality and audible perspective is provided, when the first vehicle electronics 25 and the second vehicle electronics 35 are positioned left and right of one another, the first speaker 260 and the second speaker 265 are positioned left and right of one another, and the feedback sound 15 representative of the vehicle on the left is communicated primarily through the speaker on the left and the feedback sound 15 representative of the vehicle on the right is communicated primarily through the speaker on the right, depending on the relative position of the first vehicle electronics 25 and the second vehicle electronics 35. Once the first vehicle electronics 25 and the second vehicle electronics 35 are positioned adjacent one another, the feedback sound 15 representative of the vehicle on the left and the vehicle on the right may be the same in the first speaker 260 and the second speaker 265. The stereo effect is also possible when the first vehicle electronics 25 and the second vehicle electronics 35 are positioned front and rear of one another, the first speaker 260 and the second speaker 265 are positioned front and rear of one another, and the feedback sound 15 representative of the vehicle in the front is communicated primarily through the speaker in the front and the feedback sound 15 representative of the vehicle in the rear is communicated primarily through the speaker in the rear, depending on the relative position of the first vehicle electronics 25 and the second vehicle electronics 35. Once the first vehicle electronics 25 and the second vehicle electronics 35 are positioned adjacent one another, the feedback sound 15 representative of the vehicle in front and the vehicle in the rear may be the same in the first speaker 260 and the second speaker 265. Other vehicle and speaker configurations are contemplated by this disclosure.

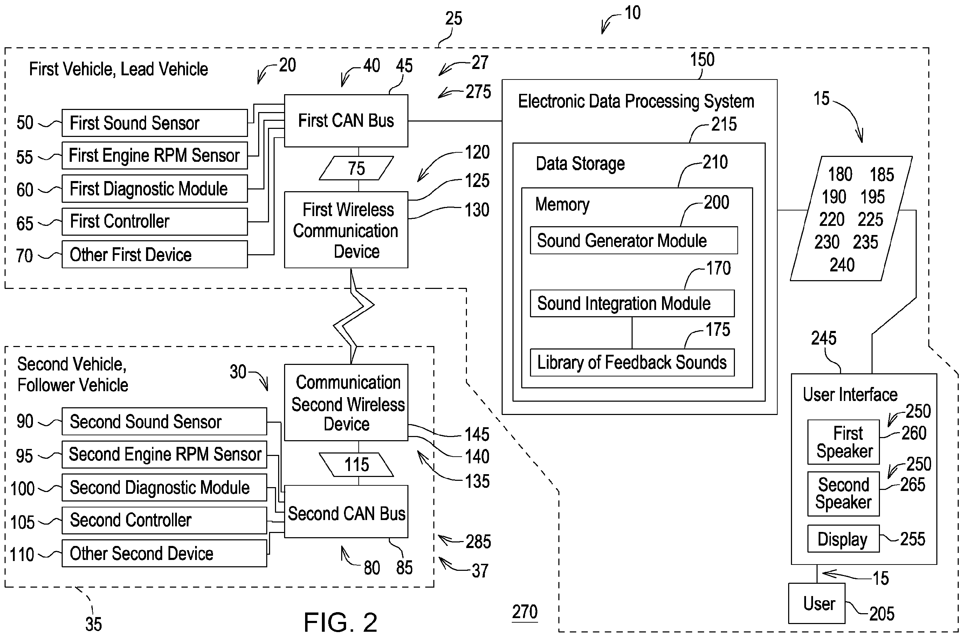

Referring to FIG. 2, in another embodiment, the illustrated feedback system 10 is configured for providing the feedback sound 15 representative of the first vehicle status 20 of the first vehicle electronics 25 (e.g., tractor, combine, construction vehicle) and the second vehicle status 30 of the second vehicle electronics 35 (e.g., tractor, combine, construction vehicle) working together in a work area 270. The feedback system 10 of FIG. 2 is similar to the feedback system 10 of FIG. 1, except that the feedback sound 15 is provided to a user 205 of the first vehicle 27, such as within a cab or at the user interface 245 of the first vehicle 27. Like reference numbers in FIG. 1 and FIG. 2 indicate like elements.

The feedback system 10 comprises the first vehicle data bus 40 of the first vehicle electronics 25. The first wireless communication device 120 is in communication with the first vehicle data bus 40. The first wireless communication device 120 is configured to receive second vehicle status data 115 from the second wireless communication device 135 of the second vehicle electronics 35. In the first vehicle electronics 25, the electronic data processing system 150 is configured to receive the first vehicle status data 75 and the second vehicle status data 115. The sound integration module 170 is capable of forming or determining the feedback sound 15 from the first vehicle status data 75 and the second vehicle status data 115. The sound generator module 200 is configured to communicate the feedback sound 15 to the user 205.

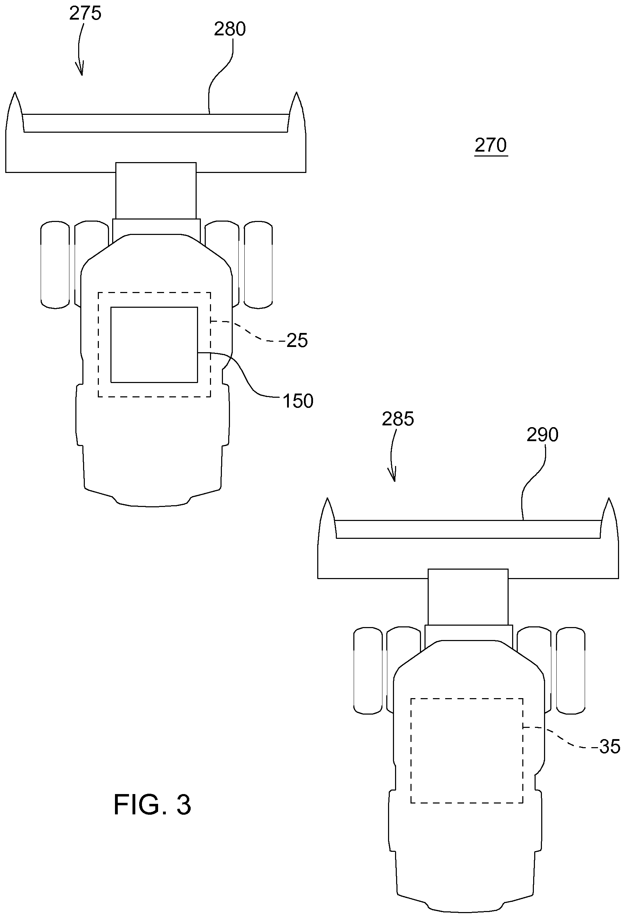

With reference to FIG. 3, the first vehicle electronics 25 may be supported on a lead vehicle 275 (e.g., combine). The lead vehicle 275 may comprise a lead implement 280 (e.g., header). The second vehicle electronics 35 may be supported on a follower vehicle 285 (e.g., combine) configured to follow the lead vehicle 275. The follower vehicle 285 may comprise a follower implement 290 (e.g., header). It is contemplated that the lead vehicle 275 may operate in front of, behind, to the left, or to the right of the follower vehicle 280. The electronic data processing system 150 may be coupled to the lead vehicle 275. The first vehicle status data 75 (FIG. 2) may pertain to the lead implement 280. The second vehicle status data 115 (FIG. 2) may pertain to the follower implement 290.

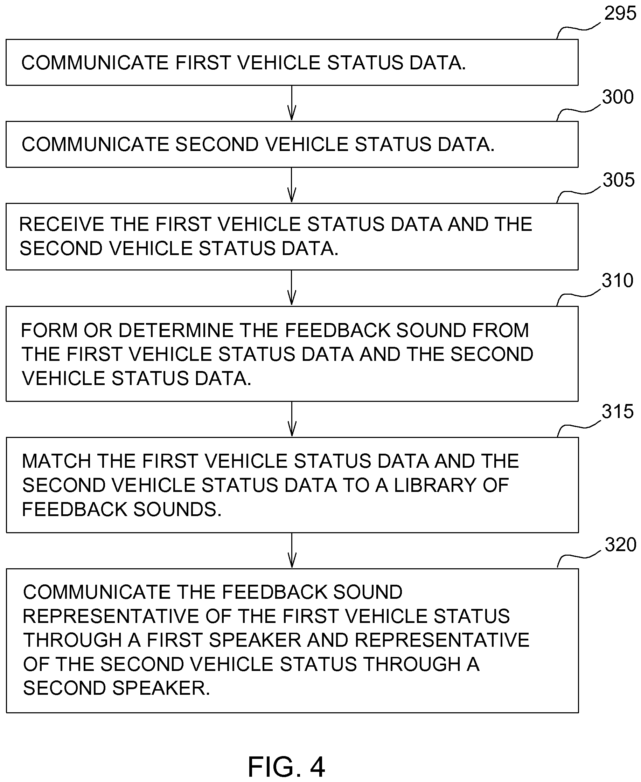

Referring to FIG. 4, a flow chart of the steps of the method for providing sound feedback to a user or manager of one or more vehicles is disclosed according to one example. In step 295, the first vehicle status data 75 is communicated. In step 300, the second vehicle status data 115 is communicated. In step 305, the first vehicle status data 75 and the second vehicle status data 115 are received by an electronic data processing system 150. In step 310, the feedback sound 15 is formed or determined from the first vehicle status data 75 and the second vehicle status data 115 by a sound integration module 170. In step 315, the first vehicle status data 75 and the second vehicle status data 115 are matched to a library of feedback sounds 175 by the sound integration module 170. In step 320, the feedback sound 15 representative of the first vehicle status 20 is communicated primarily through a first speaker 260. The feedback sound 15 representative of the second vehicle status 30 is communicated primarily through a second speaker 265.

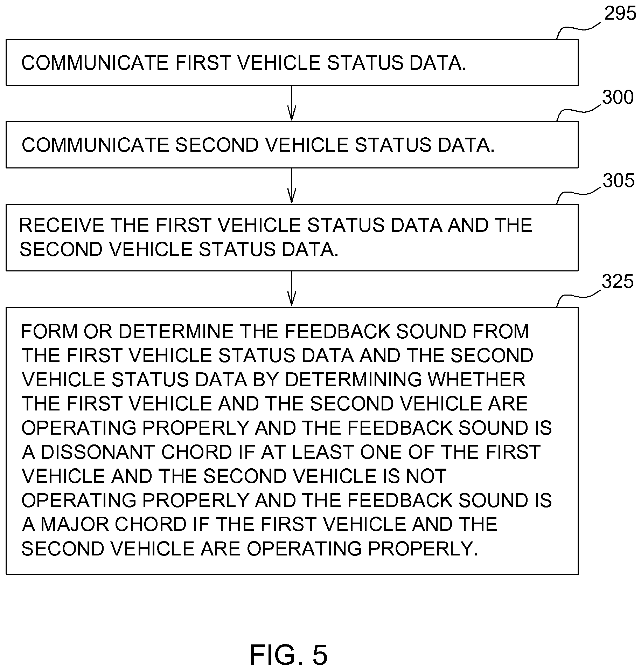

With reference to FIG. 5, a flow chart of the steps of the method for providing sound feedback to a user or manager of one or more vehicles is disclosed according to the invention. In step 295, the first vehicle status data 75 is communicated. In step 300, the second vehicle status data 115 is communicated. In step 305, the first vehicle status data 75 and the second vehicle status data 115 are received by an electronic data processing system 150. In step 325, the feedback sound 15 is formed or determined from the first vehicle status data 75 and the second vehicle status data 115 by determining whether the first vehicle 27 and the second vehicle 37 are operating properly. The feedback sound 15 is a dissonant chord 180 if at least one of the first vehicle 27 and the second vehicle 37 is not operating properly. The feedback sound 15 is a major chord 185 if the first vehicle 27 and the second vehicle 37 are operating properly.

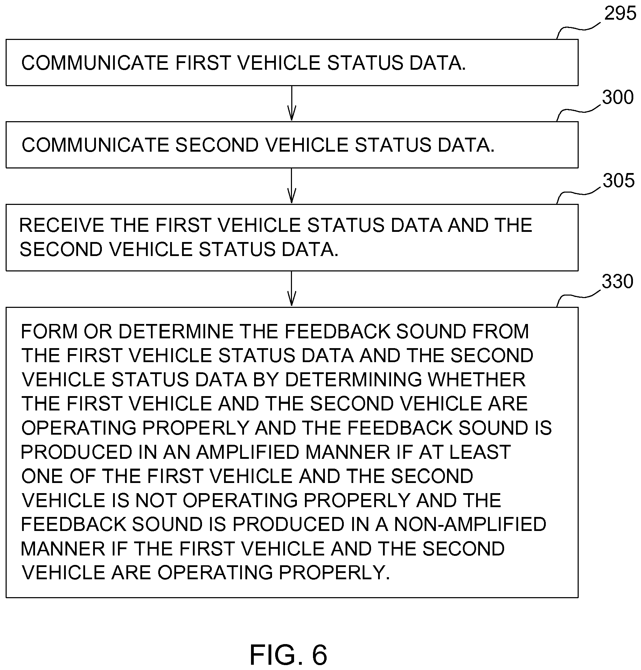

Referring to FIG. 6, a flow chart of the steps of the method for providing sound feedback to a user or manager of one or more vehicles is disclosed according to an example. In step 295, the first vehicle status data 75 is communicated. In step 300, the second vehicle status data 115 is communicated. In step 305, the first vehicle status data 75 and the second vehicle status data 115 are received by an electronic data processing system 150. In step 330, the feedback sound 15 is formed or determined from the first vehicle status data 75 and the second vehicle status data 115 by determining whether the first vehicle 27 and the second vehicle 37 are operating properly. The feedback sound 15 is produced in an amplified manner 190 if at least one of the first vehicle 27 and the second vehicle 37 is not operating properly. The feedback sound 15 is produced in a non-amplified manner 195 if the first vehicle 27 and the second vehicle 37 are operating properly.

Advantageously, the feedback system 10 enables the user 205 to react more quickly to changing conditions by listening for the feedback sound 15. This saves fuel, prevents damage to the first vehicle 27 and the second vehicle 37, and provides other benefits.

## Claims

1. A sound feedback system (10) configured for providing a feedback sound (15) representative of a first vehicle status (20) of a first vehicle (27) and a second vehicle status (30) of a second vehicle (37) operating together in a work area, the sound feedback system (10) comprising:
a first vehicle data bus (40) of the first vehicle (27);
a first wireless communication device (120) in communication with the first vehicle data bus (40), the first wireless communication device (120) configured to receive second vehicle status data (115) from a second wireless communication device (135) of the second vehicle (37);
in the first vehicle (27), an electronic data processing system (150) configured to receive first vehicle status data (75) and the second vehicle status data (115);
a sound integration module (170) capable of forming or determining the feedback sound (15) from the first vehicle status data (75) and the second vehicle status data (115); and
a sound generator module (200) configured to communicate the feedback sound (15) to a user,
**characterized in that** the sound generator module (200) is configured to determine whether the first vehicle (27) and the second vehicle (37) are operating properly and generate a first tone (220) representative of the first vehicle status data (75) and a second tone (225) representative of the second vehicle status data (115), if at least one of the first vehicle (27) and the second vehicle (37) is not operating properly the first tone (220) and the second tone (225) are on different frequencies or spaced apart in the frequencies of a minor chord or a dissonant sound, if the first vehicle (27) and the second vehicle (37) are operating properly, the first tone (220) and the second tone (225) are on the same frequency or spaced on frequencies that form notes of a major chord.

2. The sound feedback system (10) of claim 1, further comprising at least one of a first sound sensor (50) and a first engine RPM sensor (55) in communication with the first vehicle data bus (40) and at least one of a second sound sensor (90) and a second engine RPM sensor (95) in communication with a second vehicle data bus (80) of the second vehicle (37).

3. The sound feedback system (10) of claim 1, further comprising a user interface (245) comprising a speaker (260, 265), the user interface (245) in communication with the sound generator module (200), the user interface (245) configured to communicate the feedback sound (15) through the speaker (260, 265).

4. The sound feedback system (10) of claim 1, wherein:
the second wireless communication device (135) is in communication with a second vehicle data bus (80) and configured to communicate the second vehicle status data (115),
the first wireless communication device (120) is configured to communicate the first vehicle status data (75);
and an electronic data processing system (150) comprises a third wireless communication device (155) configured to receive the first vehicle status data (75) and the second vehicle status data (115).

5. The sound feedback system (10) of claim 4, wherein the first vehicle (27) is a lead vehicle, the second vehicle (37) is a follower vehicle configured to follow the lead vehicle, and the electronic data processing system (150) is coupled to the lead vehicle.

6. The sound feedback system (10) of claim 4, wherein the first wireless communication device (120) is at least one of a first transceiver and a first transmitter, the second wireless communication device (135) is at least one of a second transceiver and a second transmitter, and the third wireless communication device (155) is at least one of a third transceiver and a receiver.

7. The sound feedback system (10) of claim 4, wherein the first vehicle data bus (40) is a first CAN bus and the second vehicle data bus (80) is a second CAN bus.

## Patentansprüche

1. Schallrückmeldungssystem (10), das konfiguriert ist, einen Rückmeldungsschall (15) bereitzustellen, der einen ersten Fahrzeugzustand (20) eines ersten Fahrzeugs (27) und einen zweiten Fahrzeugzustand (30) eines zweiten Fahrzeugs (37), die in einem Arbeitsbereich zusammenarbeiten, repräsentiert, wobei das Schallrückmeldungssystem (10) Folgendes umfasst:
einen ersten Fahrzeugdatenbus (40) des ersten Fahrzeugs (27);
eine erste drahtlose Kommunikationseinrichtung (120) in Kommunikation mit dem ersten Fahrzeugdatenbus (40), wobei die erste drahtlose Kommunikationseinrichtung (120) konfiguriert ist, zweite Fahrzeugzustandsdaten (115) von einer zweiten drahtlosen Kommunikationseinrichtung (135) des zweiten Fahrzeugs (37) zu empfangen;
ein elektronisches Datenverarbeitungssystem (150) in dem ersten Fahrzeug (27), das konfiguriert ist, erste Fahrzeugzustandsdaten (75) und die zweiten Fahrzeugzustandsdaten (115) zu empfangen;
ein Schallintegrationsmodul (170), das in der Lage ist, den Rückmeldungsschall (15) aus den ersten Fahrzeugzustandsdaten (75) und den zweiten Fahrzeugzustandsdaten (115) zu bilden oder zu bestimmen; und
ein Schallerzeugermodul (200), das konfiguriert ist, den Rückmeldungsschall (15) einem Anwender zu übermitteln;
**dadurch gekennzeichnet, dass** das Schallerzeugermodul (200) konfiguriert ist, zu bestimmen, ob das erste Fahrzeug (27) und das zweite Fahrzeug (37) ordnungsgemäß arbeiten, und einen ersten Ton (220), der die ersten Fahrzeugzustandsdaten (75) repräsentiert, und einen zweiten Ton (225), der die zweiten Fahrzeugzustandsdaten (115) repräsentiert, zu erzeugen, wobei dann, wenn das erste Fahrzeug (27) und/oder das zweite Fahrzeug (37) nicht ordnungsgemäß arbeiten, der erste Ton (220) und der zweite Ton (225) bei verschiedenen Frequenzen oder im Abstand der Frequenzen eines Mollakkords oder eines dissonanten Schalls liegen und dann, wenn das erste Fahrzeug (27) und das zweite Fahrzeug (37) ordnungsgemäß arbeiten, der erste Ton (220) und der zweite Ton (225) auf derselben Frequenz oder im Abstand von Frequenzen liegen, die Noten eines Durakkords bilden.

2. Schallrückmeldungssystem (10) nach Anspruch 1, das ferner einen ersten Schallsensor (50) und/oder einen ersten Kraftmaschinendrehzahlsensor (55) in Kommunikation mit dem ersten Fahrzeugdatenbus (40) und einen zweiten Schallsensor (90) und/oder einen zweiten Kraftmaschinendrehzahlsensor (95) in Kommunikation mit dem zweiten Fahrzeugdatenbus (80) des zweiten Fahrzeugs (37) umfasst.

3. Schallrückmeldungssystem (10) nach Anspruch 1, das ferner eine Anwenderschnittstelle (245) umfasst, die einen Lautsprecher (260, 265) umfasst, wobei die Anwenderschnittstelle (245) in Kommunikation mit dem Schallerzeugungsmodul (200) ist und die Anwenderschnittstelle (245) konfiguriert ist, den Rückmeldungsschall (15) über den Lautsprecher (260, 265) zu übermitteln.

4. Schallrückmeldungssystem (10) nach Anspruch 1, wobei
die zweite drahtlose Kommunikationseinrichtung (135) in Kommunikation mit einem zweiten Fahrzeugdatenbus (80) ist und konfiguriert ist, die zweiten Fahrzeugzustandsdaten (115) zu übermitteln,
die erste drahtlose Kommunikationseinrichtung (120) konfiguriert ist, die ersten Fahrzeugzustandsdaten (75) zu übermitteln; und
ein elektronisches Datenverarbeitungssystem (150) eine dritte drahtlose Kommunikationseinrichtung (155) umfasst, die konfiguriert ist, die ersten Fahrzeugzustandsdaten (75) und die zweiten Fahrzeugzustandsdaten (115) zu empfangen.

5. Schallrückmeldungssystem (10) nach Anspruch 4, wobei das erste Fahrzeug (27) ein Führungsfahrzeug ist, das zweite Fahrzeug (37) ein folgendes Fahrzeug ist, das konfiguriert ist, dem Führungsfahrzeug zu folgen, und das elektronische Datenverarbeitungssystem (150) an das Führungsfahrzeug gekoppelt ist.

6. Schallrückmeldungssystem (10) nach Anspruch 4, wobei die erste drahtlose Kommunikationseinrichtung (120) eine erste Sende-/Empfangseinrichtung und/oder ein erster Sender ist, die zweite drahtlose Kommunikationseinrichtung (135) eine zweite Sende-/Empfangseinrichtung und/oder ein zweiter Sender ist und die dritte drahtlose Kommunikationseinrichtung (155) eine dritte Sende-/Empfangseinrichtung und/oder ein Empfänger ist.

7. Schallrückmeldungssystem (10) nach Anspruch 4, wobei der erste Fahrzeugdatenbus (40) ein erster CAN-Bus ist und der zweite Fahrzeugdatenbus (80) ein zweiter CAN-Bus ist.

## Revendications

1. Système de retour sonore (10) configuré pour fournir un son de retour (15) représentant un état de premier véhicule (20) d'un premier véhicule (27) et un état de deuxième véhicule (30) d'un deuxième véhicule (37) fonctionnant ensemble dans une zone de travail, le système de retour sonore (10) comprenant :
un bus de données de premier véhicule (40) du premier véhicule (27) ;
un premier dispositif de communication sans fil (120) en communication avec le bus de données de premier véhicule (40), le premier dispositif de communication sans fil (120) étant configuré pour recevoir des données d'état de deuxième véhicule (115) en provenance d'un deuxième dispositif de communication sans fil (135) du deuxième véhicule (37) ;
à bord du premier véhicule (27), un système de traitement électronique de données (150) configuré pour recevoir des données d'état de premier véhicule (75) et des données d'état de deuxième véhicule (115) ;
un module d'intégration sonore (170) apte à former ou à déterminer le son de retour (15) à partir des données d'état de premier véhicule (75) et des deuxième d'état de deuxième véhicule (115) ; et
un module générateur sonore (200) configuré pour communiquer le son de retour (15) à un utilisateur,
**caractérisé en ce que** le module générateur sonore (200) est configuré pour déterminer si le premier véhicule (27) et le deuxième véhicule (37) fonctionnent correctement ou non et générer une première tonalité (220) représentant les données d'état de premier véhicule (75) et une deuxième tonalité (225) représentant les données d'état de deuxième véhicule (115), si au moins un véhicule parmi le premier véhicule (27) et le deuxième véhicule (37) ne fonctionne pas correctement, la première tonalité (220) et la deuxième tonalité (225) sont sur des fréquences différentes et espacées dans les fréquences d'un accord mineur ou d'un son dissonant, si le premier véhicule (27) et le deuxième véhicule (37) fonctionnent correctement, la première tonalité (220) et la deuxième tonalité (225) sont sur la même fréquence ou espacées sur des fréquences qui forment des notes d'un accord majeur.

2. Système de retour sonore (10) selon la revendication 1, comprenant en outre un premier capteur sonore (50) et/ou un premier capteur de régime moteur (55) en communication avec le bus de données de premier véhicule (40), et un deuxième capteur sonore (90) et/ou un deuxième capteur de régime moteur (95) en communication avec un bus de données de deuxième véhicule (80) du deuxième véhicule (37).

3. Système de retour sonore (10) selon la revendication 1, comprenant en outre une interface utilisateur (245) comprenant un haut-parleur (260, 265), l'interface utilisateur (245) étant en communication avec le module générateur sonore (200), l'interface utilisateur (245) étant configurée pour communiquer le son de retour (15) par le biais du haut-parleur (260, 265).

4. Système de retour sonore (10) selon la revendication 1, dans lequel :
le deuxième dispositif de communication sans fil (135) est en communication avec un bus de données de deuxième véhicule (80) et configuré pour communiquer les données d'état de deuxième véhicule (115),
le premier dispositif de communication sans fil (120) est configuré pour communiquer les données d'état de premier véhicule (75) ;
et un système de traitement électronique de données (150) comprend un troisième dispositif de communication sans fil (155) configuré pour recevoir les données d'état de premier véhicule (75) et les données d'état de deuxième véhicule (115).

5. Système de retour sonore (10) selon la revendication 4, dans lequel le premier véhicule (27) est un véhicule meneur, le deuxième véhicule (37) est un véhicule suiveur configuré pour suivre le véhicule meneur, et le système de traitement électronique de données (150) est couplé au véhicule meneur.

6. Système de retour sonore (10) selon la revendication 4, dans lequel le premier dispositif de communication sans fil (120) est un premier émetteur-récepteur et/ou un premier émetteur, le deuxième dispositif de communication sans fil (135) est un deuxième émetteur-récepteur et/ou un deuxième émetteur et le troisième dispositif de communication sans fil (155) est un troisième émetteur-récepteur et/ou un récepteur.

7. Système de retour sonore (10) selon la revendication 4, dans lequel le bus de données de premier véhicule (40) est un premier bus CAN et le bus de données de deuxième véhicule (80) est un deuxième bus CAN.
